# EUROPÄISCHE PATENTSCHRIFT

(11) **EP 2 060 793 B1**
(45) Veröffentlichungstag und Bekanntmachung des Hinweises auf die Patenterteilung: **12.12.2018**
(21) Anmeldenummer: 08018522.6
(22) Anmeldetag: 23.10.2008
(51) Int. Cl.: H02K 11/20, F04D 17/16, F04D 19/04, F04D 29/52, F04D 25/06, H02K 5/22

(54) **Vakuumpumpe**
Vacuum pump
Pompe à vide

(30) Priorität: 13.11.2007 DE 102007053980
(43) Veröffentlichungstag der Anmeldung: 20.05.2009
(73) Patentinhaber: Pfeiffer Vacuum GmbH, 35614 Aßlar (DE)
(72) Erfinder: Willig, Michael, 35633 Lahnau (DE)
(74) Vertreter: Manitz Finsterwald Patentanwälte PartmbB

(56) Entgegenhaltungen:
- EP-A1- 0 597 365
- DE-A1-102005 041 500
- DE-T2- 69 502 925
- JP-A- 2004 116 316
- US-A- 4 143 309

## Beschreibung

Die Erfindung betrifft eine Vakuumpumpe nach dem Oberbegriff des ersten Anspruchs, wie beispielweise aus der US 4 143 309 A bekannt. Im Wesentlichen ähnliche Vakuumpumpen werden ferner in den Druckschriften DE 10 2005 041 500 A1 und JP 2004 116316 A beschrieben.

Vakuumpumpen, insbesondere solche mit schnelldrehenden Rotoren wie beispielsweise Turbomolekularvakuumpumpen, weisen eine zunehmende Zahl von elektrischen und elektronischen Bauteilen mit zugeordneten Zuleitungen in ihrem Inneren auf. Ein Grund ist, dass zunehmend Sensoren eingebaut werden, um Betriebsgrößen zu überwachen. Dies wiederum resultiert aus den immer schwieriger werdenden Einsatzbedingungen. Im Stand der Technik wird eine Vielzahl von Bohrungen und Freidrehungen für die verschiedenen Kabel vorgesehen. Dies ist mit einem stetig steigenden Fertigungsaufwand und einer aufwändigen Gestaltung der einzelnen Teile gleichzusetzen.

Es war daher Aufgabe des Erfinders, eine kostengünstig und leicht zu fertigende Vakuumpumpe vorzustellen, die elektronische Bauteile und die zugeordneten Zuleitungen beinhaltet.

Diese Aufgabe wird gelöst durch eine Vakuumpumpe mit den Merkmalen des ersten Anspruchs. Erfindungsgemäß bildet eine Außenwand des Antriebs eine Seitenwand des ringförmigen Kanals. Dies schließt den Kanal gegen Eindringen von Partikeln und ähnlichem ab. Der Anspruch 2 gibt eine vorteilhafte Weiterbildung der Erfindung an.

Ein ringförmiger Kanal lässt sich leicht in einem einfachen Arbeitsgang beim ohnehin notwendigen Drehen eines Gehäusebauteils herstellen. Dieser Kanal nimmt eine, in der Regel aber eine Mehrzahl von elektrische Zuleitungen wenigenstens über einen Teil ihrer Länge auf. Hierdurch entfallen aufwändige Bohrungen, die weitere Arbeitsschritte erzwingen. Durch die vom Kanal abzweigende Seitenarme ist es leicht möglich, eine Vielzahl von elektronischen Bauteilen mit den Verbindungselementen der Vakuumpumpe zu verbinden. Eine Weiterbildung geht dahin, für unterschiedliche Signalarten unterschiedliche und voneinander getrennte Verbindungselemente vorzusehen. Die Signalarten unterscheiden sich beispielsweise im Betrag der Spannung oder in den Frequenzen der Strompulse. Die Zuleitungen werden dann nach Signalart gruppiert mit den Verbindungselementen verbunden. Eine gegenseitige Störung wird so zuverlässig vermieden.

Anhand einer Ausführungsbeispiels soll die Erfindung näher erläutert und weitere Vorteile aufgezeigt werden. Es zeigen:
- Fig. 1:: Schnitt durch eine Turbomolekularvakuumpumpe mit einem ringförmigen Kanal.
- Fig. 2:: Schnitt in einer Ebene senkrecht zur Rotorachse entlang A-A'.

In den nachfolgenden Figuren bezeichnen gleiche Nummern gleiche Teile.

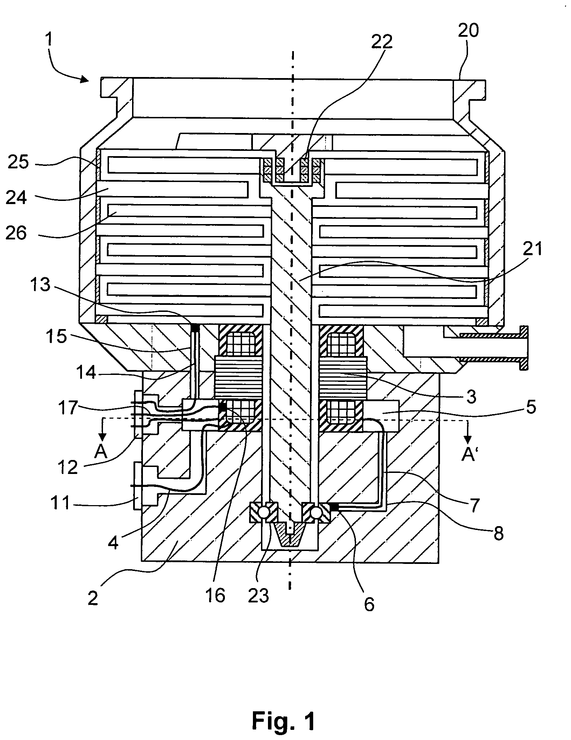

In der Figur 1 ist eine als Turbomolekularpumpe 1 ausgeführte Vakuumpumpe im Längsschnitt gezeigt. Die Turbomolekularpumpe besitzt einen Flansch 20, mit dem sie mit einer nicht gezeigten Vakuumkammer lösbar verbindbar ist. In einem Gehäuseteil 2 ist der Antrieb 3 angeordnet, welcher eine vergossene elektrische Spule umfasst. Dieser Antrieb versetzt eine Rotorwelle 21 in schnelle Drehung. Die Rotorwelle ist an ihrem flanschseitigen Ende mit einem permanentmagnetischen Lager 22 drehbar unterstützt. Sie trägt axial beabstandete Rotorscheiben 26, welche jeweils mit einem Schaufelkranz versehen sind. In die axialen Abstände greifen ebenfalls mit einem Schaufelkranz versehene Statorscheiben 24, welche durch Distanzringe 25 auf axialem Abstand gehalten werden. Durch die schnelle Drehung der Rotorscheiben ergibt sich die Pumpwirkung. Das dem Flansch abgewandte Ende
der Rotorwelle wird von einem Wälzlager 23 drehbar unterstützt. Alternativ können hier aktive und passive Magnetlager zum Einsatz kommen. Der Antrieb wird durch eine Antriebszuleitung 4 mit elektrischem Strom versorgt. Die Antriebszuleitung verbindet den Antrieb mit einem ersten elektrischen Verbindungselement 11. Von diesem führt eine nicht gezeigte elektrische Leitung zu einer ebenfalls nicht gezeigten Steuerelektronik.

Die Antriebszuleitung befindet sich über einen Teil ihrer Länge in einem ringförmigen Kanal 5. Dieser umgibt die Rotorwelle koaxial und weist Seitenwände in die axialen Richtungen und radial nach außen auf. Die innere Seitenwand wird durch einen Teil der Außenwand des Antriebs geschaffen.

Der Antrieb 3 umfasst einen Antriebssensor 16. Dies kann Temperaturfühler oder auch ein Drehzahlsensor sein. Eine erste Zuleitung 17 führt von ihm zu einem zweiten elektrischen Verbindungselement 12. Sie verläuft über einen Teil ihrer Länge durch den Ringkanal 5.

Am Wälzlager 23 ist ein Lagersensor angeordnet, der zur Temperaturüberwachung des Wälzlagers als Temperaturfühler ausgeführt ist. Überhohe Temperaturen können so festgestellt und Maßnahmen, beispielsweise die Reduzierung der Antriebsleistung oder dergleichen, eingeleitet werden. Alternativ oder zusätzlich kann am Wälzlager ein Schwingungssensor angeordnet sein. Durch einen Seitenarm 8 ist eine zweite Zuleitung 7 vom Lagersensor zum Ringkanal geführt. Durch diesen verläuft die zweite Zuleitung für einen Teil ihrer Länge und endet im zweiten elektrischen Verbindungselement. Im Falle einer aktiven magnetischen Lagerung werden die notwendigen Zuleitungen zu den aktiven Komponenten des Magnetlagers wie beispielsweise Lagerspule und Verschiebungssensor durch einen solchen Seitenarm geführt.

Ein dritter Sensor 13 ist im Bereich des Vorvakuums angeordnet. Er misst die Temperatur in diesem Bereich, wodurch überhohe Temperaturen festgestellt werden können, die zu einer Schädigung der Schaufelkränze führen können. Eine dritte Zuleitung 14 ist durch einen zweiten Seitenarm 15 in den Ringkanal 5 geführt. Dort verläuft sie für einen Teil ihrer Länge und endet schließlich am zweiten Verbindungselement.

Erste, zweite und dritte Zuleitung verbinden das zweite elektrische Verbindungselement mit den jeweiligen Sensoren. Über diese Zuleitungen werden elektrische Signale übertragen, deren Ströme und Spannungen gering sind. Diese Signale lassen sich einer ersten Signalart zuordnen. Über die mit dem ersten elektrischen Verbindungselement verbundene Antriebszuleitung werden dagegen um ein Vielfaches höhere Spannungen und Ströme übertragen. Diese Signale lassen sich einer zweiten Signalart zuordnen. Außerdem können sich die Signale noch in anderer Weise unterscheiden, beispielsweise hinsichtlich des übertragenen Frequenzbereichs. Da gerade am Übergang von Zuleitung zu Verbindungselement eine zuverlässige elektrische Isolierung der Zuleitungen gegeneinander aufwändig ist, ist es von Vorteil, die sich nach Betrag von Strom, Spannung und Frequenz stark unterscheidenden Zuleitungen zu zwei verschiedenen Verbindungselementen zu führen. Verschiedene Signalarten werden so an verschiedene Verbindungselemente geführt. Ein Störung der über die erste, zweite und dritte Zuleitung übertragenen Signale durch die Antriebszuleitung wird so vermieden.

In dem gezeigten Ausführungsbeispiel umfasst die Gruppe der elektronischen Bauteile den Antrieb, den Antriebssensor, den Lagersensor und den dritten Sensor. Weitere elektronische Bauteile sind denkbar, beispielsweise Pumpentyperkennungsmittel und Betriebsdatenspeicher.

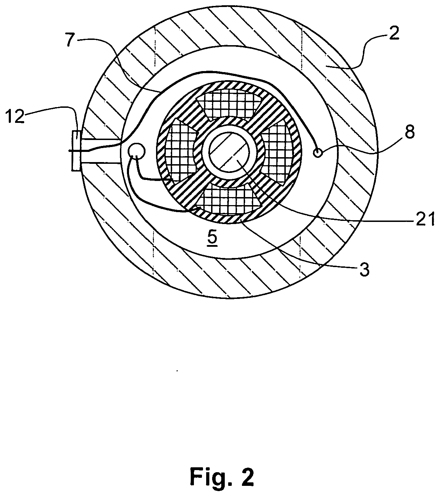

Die Figur 2 zeigt einen Schnitt durch die Turbomolekularpumpe 1, der die Gestaltung des ringförmigen Kanals verdeutlicht. Im Zentrum der Figur ist die Rotorwelle 21 zu sehen, welche von den vergossenen Spulen des Antriebs 3 koaxial umgeben ist. Die Außenwand des Vergusses bildet eine Wand des ringförmigen Kanals 5. Am zweiten elektrischen Verbindungselement 12 beginnt eine Zuleitung 7, die durch den ringförmigen Kanal verläuft und von dort in den ersten Seitenarm 8 hineingeführt ist.

## Patentansprüche

1. Vakuumpumpe (1) mit einem Gehäuseabschnitt (2), einem elektronischen Bauteil (3, 6, 13, 16) und einer zu diesem führenden elektronischen Zuleitung (4, 7, 14, 17), wobei das elektronische Bauteil (3, 6, 13, 16) ein Antrieb (3) und die Zuleitung (4, 7, 14, 17) eine Antriebszuleitung (4) ist und wobei im Gehäuseabschnitt ein ringförmiger Kanal (5) vorgesehen ist, in welchem die Zuleitung wenigstens für einen Teil ihrer Länge verläuft; **dadurch gekennzeichnet, dass** eine Außenwand des Antriebs (3) eine Seitenwand des ringförmigen Kanals (5) bildet, wobei von dem ringförmigen Kanal (5) ein Seitenarm (8, 15) abzweigt, in welchem eine elektrische Zuleitung (7, 14) zu einer elektronischen Komponente (6, 13) angeordnet ist.

2. Vakuumpumpe nach Anspruch 1, **dadurch gekennzeichnet, dass** ein erstes elektrisches Verbindungselement (11) und ein zweites elektrisches Verbindungselement (12) an der Außenwand des Gehäuseabschnitts (2) vorgesehen sind, wobei die mit den elektrischen Verbindungselementen (11, 12) in Verbindung stehenden Zuleitungen (4, 7, 14, 17) nach Signalarten gruppiert sind.

## Claims

1. A vacuum pump (1) comprising a housing section (2); an electronic element (3, 6, 13, 16) and an electronic feed line (4, 7, 14, 17) leading to said electronic element (3, 6, 13, 16), wherein the electronic element (3, 6, 13, 16) is a drive (3) and the feed line (4, 7, 14, 17) is a drive feed line (4); and wherein a ring-shaped passage (5) in which the feed line extends for at least a part of its length is provided in the housing section, **characterized in that** an outer wall of the drive (3) forms a side wall of the ring-shaped passage (5), with a side arm (8, 15) branching off from the ring-shaped passage (5) and with an electrical feed line (7, 14) to an electronic component (6, 13) being arranged in said side arm (8, 15).

2. A vacuum pump in accordance with claim 1, **characterized in that** a first electrical connection element (11) and a second electrical connection element (12) are provided at the outer wall of the housing section (2), with the feed lines (4, 7, 14, 17) connected to the electrical connection elements (11, 12) being grouped by signal types.

## Revendications

1. Pompe à vide (1) comportant une portion de boîtier (2), un composant électronique (3, 6, 13, 16) et une ligne d'alimentation électronique (4, 7, 14, 17) menant vers celui-ci, le composant électronique (3, 6, 13, 16) étant un entraînement (3) et la ligne d'alimentation (4, 7, 14, 17) étant une ligne d'alimentation d'entraînement (4), et un canal annulaire (5) étant prévu dans la portion de boîtier, dans lequel la ligne d'alimentation s'étend au moins pour une partie de sa longueur ;
**caractérisée en ce que**
une paroi extérieure de l'entraînement (3) constitue une paroi latérale du canal annulaire (5), un bras latéral (8, 15) se ramifiant du canal annulaire (5), dans lequel est agencée une ligne d'alimentation électrique (7, 14) vers un composant électronique (6, 13).

2. Pompe à vide selon la revendication 1,
**caractérisée en ce que**
un premier élément de connexion électrique (11) et un second élément de connexion électrique (12) sont prévus sur la paroi extérieure de la portion de boîtier (2), les lignes d'alimentation (4, 7, 14, 17) en connexion avec les éléments de connexion électriques (11, 12) étant groupées en fonction des types de signaux.
